Europäisches Patentamt

European Patent Office

Office européen des brevets

(11) Publication number: **0 469 699 A1**

# EUROPEAN PATENT APPLICATION

(21) Application number: **91303734.7**

(22) Date of filing: **25.04.91**

(51) Int. Cl.5: **G02C 9/00**

(30) Priority: **01.08.90 JP 207736/90**

(43) Date of publication of application:
**05.02.92 Bulletin 92/06**

(84) Designated Contracting States:
**DE ES FR GB IT**

(71) Applicant: **SEELEX KABUSHIKI KAISHA**
**No 14-3, 5-chome, Ninomiya**
**Fukui-shi, Fukui-ken(JP)**

(72) Inventor: **Nitta, Yukuo**
**No. 5-14-3 Ninomiya**
**Fukui-shi, Fukui-ken(JP)**

(74) Representative: **Carpenter, David et al**
**MARKS & CLERK Alpha Tower Suffolk Street**
**Oueensway**
**Birmingham B1 1TT(GB)**

(54) **Secondary spectacles.**

(57) Secondary spectacles are provided for use in conjunction with primary spectacles, the secondary spectacles comprising a pair of lenses (6) interconnected in spaced relationship by a bridge (1) and characterized in that the bridge (1) is shaped so as to be received and retained within a gap defined by the bridge (3), the lenses (5) of the primary spectacles so as to locate the lenses (6) of the secondary spectacles in relation to the lenses (5) of the primary spectacles.

FIG. 1

EP 0 469 699 A1

This invention relates to secondary spectacles for use in conjunction with primary spectacles, usually sight correction spectacles the secondary spectacles being equipped with light adjusting lenses such as polarized lenses or ultraviolet prevention lenses and easily attached to and removed from the primary spectacles.

Ultraviolet radiation can cause not only dermatitis or skin cancer, but can also cause damage to the retina covering the inner surface of the human eye ball. It is also reported that bright sunlight is a factor in many traffic accidents. In order to avoid such retina damage or driving accidents, the most compact and effective countermeasure is to use sunglasses. Sunglasses are generally used for sunbathing, fishing, driving, golfing and other outdoor activities. However, a person who usually wears spectacles because of myopia or antigmatism finds it difficult to use normal sunglasses.

As a matter of course, a person who wears spectacles needs sunglasses, but it is almost impossible to prepare various kinds of spectacles which are equipped with both eyesight correction and other ultraviolet protection so that they can be used in various instances such as driving, fishing, mountaineering, skiing and so on. The production and stock control of such multi-function spectacles are difficult for the dealer.

In the prior art, sunglasses are attached to an upper rim part of a pair of primary spectacles and can be flipped-up (flip-up and clip-on sunglasses). This provides protection from the sun plus normal eyesight correction. The flip-up clip-on sunglasses are attached to normal lenses when in use and are flipped up beyond an upper rim part of the primary spectacles when not in use.

Therefore, in the prior art eyesight correction and ultraviolet protection are provided. However, the prior art has the following defects: the flip-up mechanism has a weight associated therewith; and the viewing range of the primary spectacles with the flip-up mechanism is greatly reduced. Therefore, the prior art does not offer complete satisfaction to the user.

In view of the above problems with the prior art, the present invention has been developed.

It is an object of the present invention to provide secondary spectacles, for use in conjunction with primary spectacles, the secondary spectacles being fashionable, lightweight and easily, and quickly, attachable to, or removable from, the primary spectacles.

According to a first aspect of the present invention, there are provided secondary spectacles for use in conjunction with primary spectacles, the secondary spectacles comprising a pair of lenses interconnected in spaced relationship by a bridge and characterized in that the bridge is shaped so as to be received and retained, in use, within a gap defined by the bridge, the brace bar and the lenses of the primary spectacles so as to locate the lenses of the secondary spectacles in relation to the lenses of the primary spectacles.

Preferably, the bridge of the secondary spectacles is an elastic fit between the bridge and the brace bar of the primary spectacles.

Preferably, the elasticity of the bridge is derived from the resilience of the material of the bridge.

Alternatively, the bridge includes a component or components spring biassed towards the primary spectacles bridge or/and brace bar respectively.

In another alternative, the bridge of the secondary spectacles can engage the brace bar and bridge of the primary spectacles as a snap fit.

Preferably, the bridge has grooves for receiving the primary spectacles brace bar and bridge respectively.

Preferably, the secondary spectacles bridge incorporates a strap for embracing at least the primary spectacles bridge to retain the secondary spectacles on the primary spectacles.

According to a second aspect of the present invention there is provided secondary spectacles for use in conjunction with primary spectacles of the kind having a pair of primary lenses interconnected in spaced relationship by a primary bridge, the secondary spectacles comprising a pair of secondary lenses interconnected in spaced relationship by a secondary bridge and being characterized in that the secondary bridge is shaped to fit, in use, the gap defined by the bridge and lenses of the primary spectacles to position the secondary lenses in relation to the primary lenses and includes means for gripping the primary spectacles bridge to retain the secondary spectacles on the primary spectacles in use.

Preferably, the secondary spectacles bridge is arranged to engage the primary spectacles bridge, or part thereof, as a snap fit.

Preferably, the secondary spectacles bridge incorporates a strap for embracing at least the primary spectacles bridge to retain the secondary spectacles on the primary spectacles.

According to a third aspect of the present invention there is provided a combination of primary spectacles having a pair of primary lenses interconnected in spaced relationship by a primary bridge and secondary spectacles according to one of the first and second aspects of the present invention, the lenses of the secondary spectacles being positioned in relation to the lenses of the primary spectacles by engagement of the bridge of the secondary spectacles in the gap defined between the lenses and the bridge of the primary spectacles.

Preferably, the primary spectacles incorporate a brace bar parallel to the bridge, the gap receiving the secondary spectacles bridge being further defined by the brace bar.

The invention will further be described by way of example with reference to the accompanying drawings in which similar parts are accorded the same reference numerals and in which:

Figure 1 is a perspective view of secondary spectacles according to a first embodiment of the present invention,

Figure 2 (a) - 2 (c) are enlarged fragmentary sectional views of the first embodiment,

Figure 3 is a perspective view of secondary spectacles according to a second embodiment of the present invention,

Figure 4 (a) and 4 (b) are enlarged fragmentary sectional views of the second embodiment,

Figure 5 is a perspective view of secondary spectacles according to a third embodiment of the present invention,

Figure 6 is an enlarged fragmentary sectional view of the third embodiment,

Figure 7 is a perspective view of secondary spectacles according to a fourth embodiment of the present invention,

Figure 8 is an enlarged fragmentary sectional view of the fourth embodiment,

Figure 9 is a perspective view of secondary spectacles according to a fifth embodiment of the present invention, and

Figure 10 (a) and 10 (b) are enlarged fragmentary sectional views of the fifth embodiment.

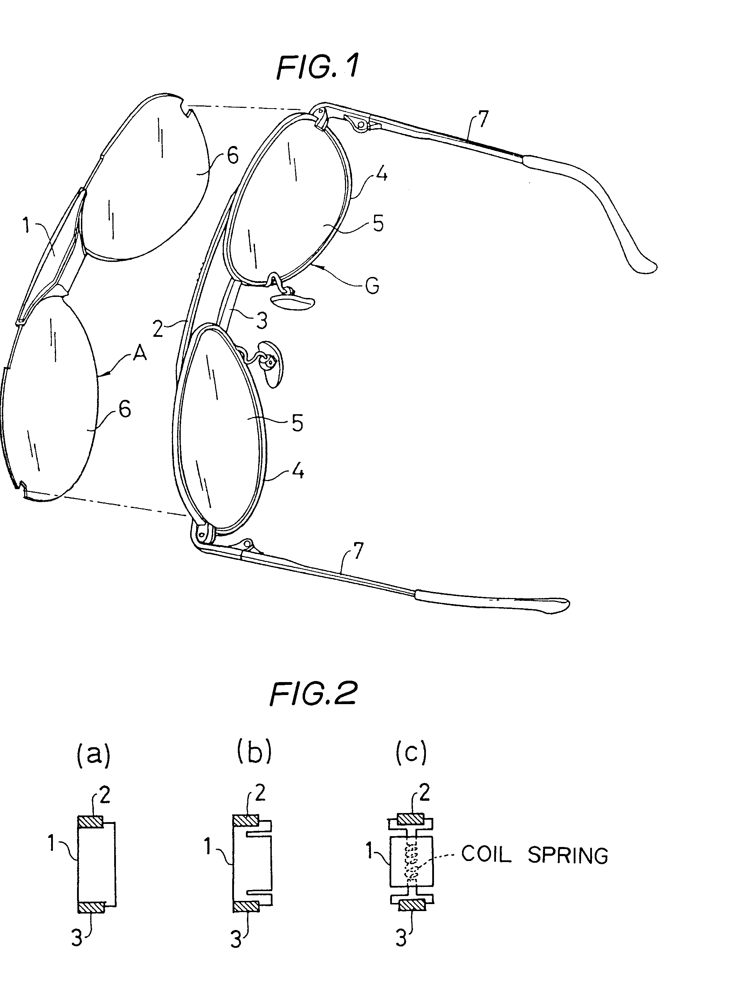

A first embodiment according to the present invention will now be explained with reference to Figure 1 and Figure 2 (a). In Figure 1, a frame body (G) for normal (primary) spectacles includes a pair of rims (4) connected by a bridge (3), a brace bar (2) formed above the bridge (3) for reinforcement, a pair of arms (7) formed foldably on an outer end of the rims (4), and a pair of eyesight correction lenses (5) inserted into said rims (4). An additional frame (A) of the secondary spectacles includes a connecting bridge (1) made from, for example, plastic and has an approximately trapezoidal form. The connecting bridge (1) is adapted to be inserted into a gap formed by the brace bar (2), the bridge (3) and the rims (4) from the front side of the frame body (G). A pair of light adjusting lenses (6) of the secondary spectacles are connected together by the connecting bridge (1) and are made from, for example, coloured plastic material. After the insertion of the connecting bridge (1) into the gap, the brace bar (2) and the bridge (3) pinch the connecting bridge (1) to hold it in an upright position. The rims (4) pinch the connecting bridge (1) from the right and left sides to hold it in place. Accordingly, the additional flame (A) is located just on the front of frame body (G) and the pair of light adjusting lenses (6) is placed over the pair of eyesight correction lenses (5). The first embodiment therefore provides secondary spectacles used as sunglasses for normal spectacle wearers. When this additional flame (A) is taken away from the normal spectacles the normal spectacles perform their intended function.

The first embodiment has now been described but variations can be also adopted as shown in Figure 2 (b) and Figure 2 (c). The connecting bridge (1) can be produced in the form of a built-in elastic device between the brace bar (2) and the bridge (3). As shown, the elasticity can be derived from the bridge itself (Figure 2b or from spring loaded components of the bridge (Figure 2c). The elastic device can be also applied between the pair of rims (4).

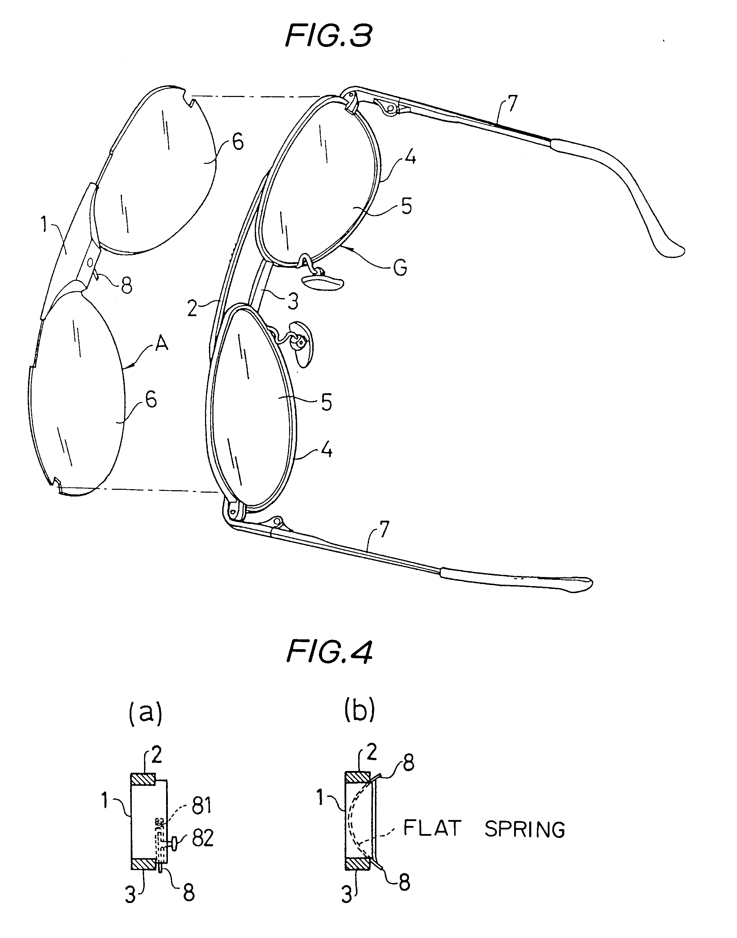

With reference to Figure 3 and Figure 4, a second embodiment is now explained. A frame body (G) of normal spectacles and an additional frame (A) have the same construction as that of the first embodiment shown in Figure 1.

A projection (8) is formed on the connecting bridge (1) and has an internal spring (81). The projection (8) is adapted to yield to pressure (by compression of spring (81)) and withdraws inside the connecting bridge (1) when an outer force is applied or a knob (82) is extended.

The connecting bridge (1) is inserted into a gap formed by the brace bar (2), the bridge (3) and the pair of rims (4) from the front side of the frame body (G). Then, the projection (8) is withdrawn and the brace bar (2) and the bridge (3) pinch the connecting bridge (1) to hold it in place. After the connecting bridge (1) is inserted into the gap, the projection (8) is released and is biased outwardly by its spring (81) to ensure a tight connection between the frame body (G) and the additional frame (A). Therefore, the correct location of the additional frame (A) on the frame body (G) is obtained.

A pair of light adjusting lenses (6) is thus positioned over a pair of eyesight correction lenses (5). The secondary spectacles can be used as sunglasses or additional lenses over the normal spectacles. In order to remove the connecting bridge (1) from the frame body (G) of the normal spectacles, the knob (82) is used to withdraw the projection (8) against the action of spring (81) whereafter the additional frame (A) can be removed to return the normal spectacles to their intended function of eyesight correction.

With reference to Figure 4 (b), a modified version of the second embodiment is explained. In Figure 4 (b), instead of a normal coil spring being used as the internal spring (81), a flat spring is employed.

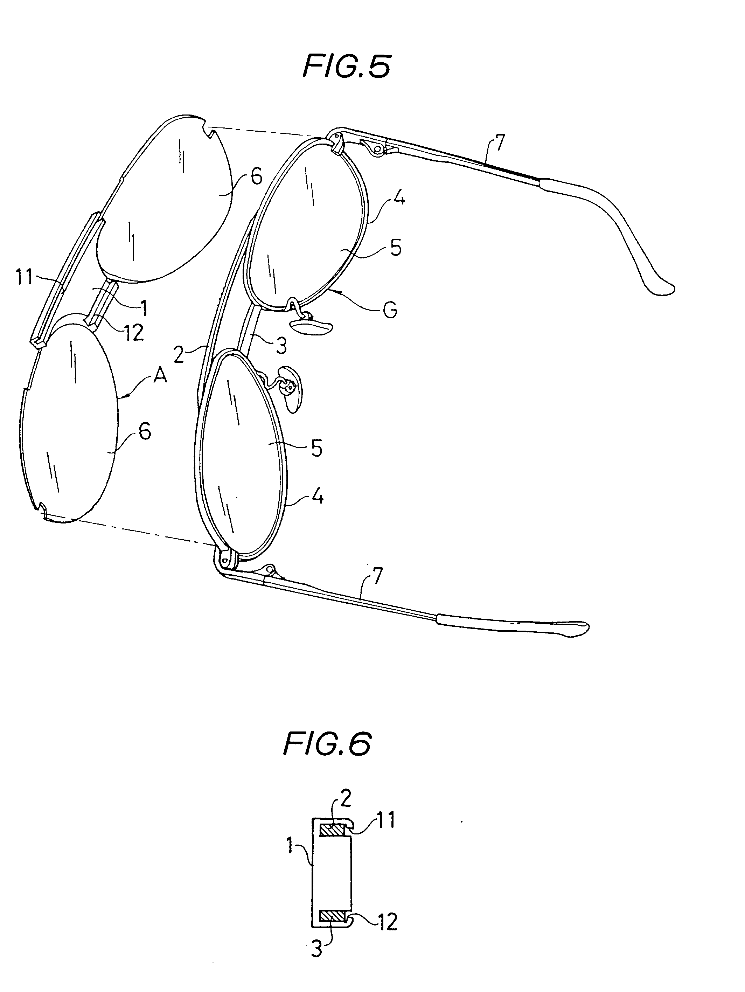

With reference to Figure 5 and Figure 6, a third embodiment according to the present invention is now explained.

A frame body (G) of normal spectacles and an additional frame (A) have the same construction as that of the first embodiment shown in Figure 1.

In Figure 5, two parallel reentrant grooves (11, 12) are formed in a contacting surface of the connecting bridge (1). The grooves (11, 12) are adapted to snap onto the brace bar (2) and the bridge (3), respectively. The connecting bridge (1) is inserted into a gap formed by the brace bar (2), the bridge (3) and a pair of rims (4) from the front side of the frame body (G) of normal spectacles, the brace bar (2) fitting into the groove (11) and the bridge (3) fitting into the groove (12), as shown in Figure 6. The brace bar (2) and the bridge (3) pinch the connecting bridge (1) to hold it in place. Thus, the additional frame (A) is attached to the front of the frame body (G) of the normal spectacles. The pair of light adjusting lenses (6) cover the pair of eyesight correction lenses (5). Therefore, the secondary spectacles can be used as sunglasses over the normal spectacles. When the connecting bridge (1) is removed from the gap formed by the brace bar (2), the bridge (3) and the pair of rims (4), the normal spectacles return to their intended function of eyesight correction.

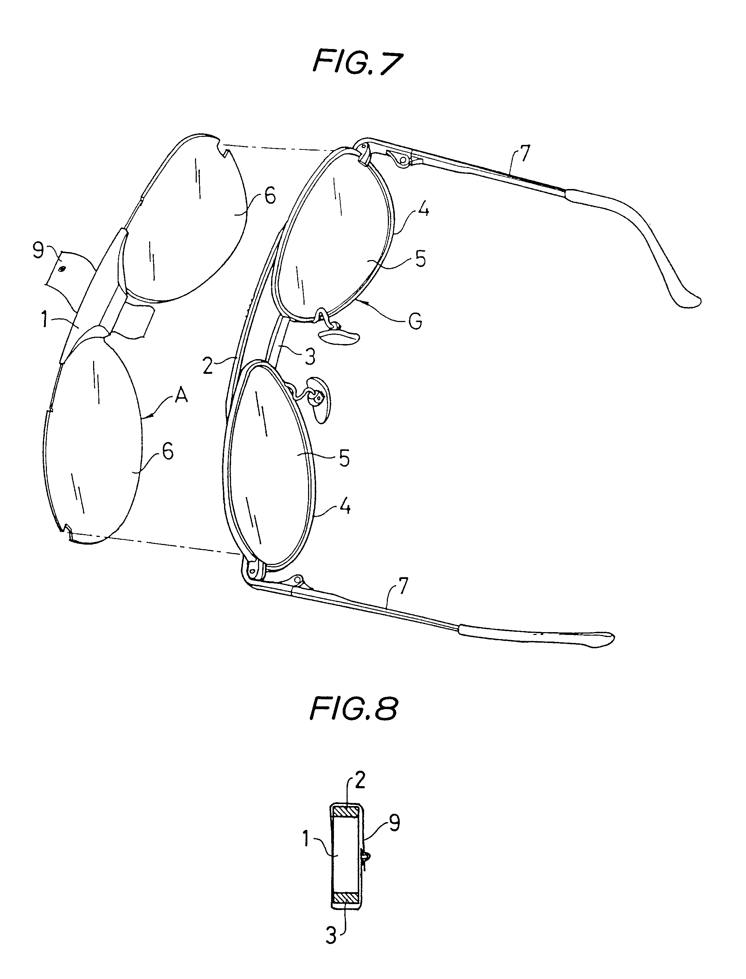

With reference to Figure 7 and Figure 8, a fourth embodiment according to the present invention is now explained.

A frame body (G) of normal spectacles and an additional frame (A) have the same construction as that of the first embodiment shown in Figure 1.

In Figure 7, a flexible band (9) is carried by the connecting bridge (1). The connecting bridge (1) is inserted into a gap formed by the brace bar (2), the bridge (3) and the pair of rims (4) from the front end of the frame body (G) of the normal spectacles. The brace bar (2) and the bridge (3) position the connecting bridge (1) and the band (9) is wrapped around the brace bar (2) and the bridge (3) and snapped together with a snap means to ensure a tight connection of the connecting bridge (1) with the frame body (G). Thus, the additional frame (A) is attached to the front of the frame body (G) of the normal spectacles.

The pair of light adjusting lenses (6) cover the pair of eyesight correction lenses (5). The secondary spectacles can be used as sunglasses over the normal spectacles. When the band (9) is unsnapped and the connecting bridge (1) is removed from the gap formed by the brace bar (2), the bridge (3) and the pair of rims (4), the normal spectacles return to their normal function of eyesight correction.

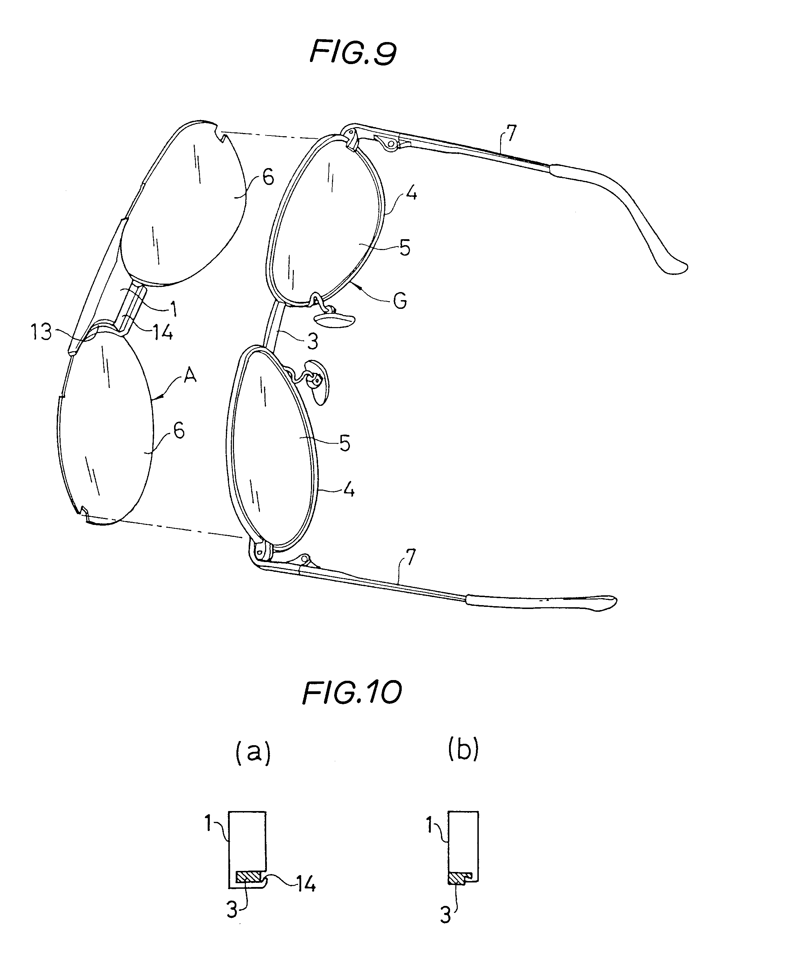

With reference to Figure 9 and Figure 10 (a), a fifth embodiment of the present invention is now explained.

A frame body (G) of normal spectacles has a pair of rims (4) united by a bridge (3), a pair of arms (7, 7) formed foldably on each outer end of the rims (4), and a pair of eyesight correction lenses inserted into the rims (4), but lacks the brace bar of the previous examples. An additional frame (A) includes a connecting bridge (1) adapted to hold a pair light adjusting lenses (6) made from, for example, coloured plastic material. The connecting bridge (1) is adapted to be fitted into a gap formed by the rims (4) and the bridge (3). A pair of first grooves (13) are formed on both sides of the connecting bridge (1) into which the rims are fitted. A second groove (14) is also formed in the bridge (1) into which the bridge (3) is fitted.

The connecting bridge (1) is inserted into the gap, the ends of the rims (4) snapping into the grooves (13) and an upper end of the bridge (3) snapping into the groove (14), respectively, to hold the additional frame (A) in place. The secondary spectacles can be used as sunglasses over the normal spectacles. When the connecting bridge (1) is removed from the gap, the normal spectacles return to their intended function of eyesight correction.

Figure 10 (b) shows a modified version of the fifth embodiment in which the connecting bridge (1) grips a rib projecting from the bridge (3). Alternatively, a band (9) shown in Figure 7 can be wrapped around the bridge (3) to connect the secondary spectacles (A) to the frame body (G) of the normal spectacles.

Utilizing the correction arrangements described above, an extra mechanism to hold additional lenses is not required. Accordingly, even if the secondary spectacles are worn over normal spectacles, they do not provide any noticeable extra weight. The secondary spectacles can be easily removed without damaging normal lenses or the additional lenses. Further, the primary spectacles and secondary spectacles look quite smart together and appear as if only a single pair of spectacles are being worn even if the secondary spectacles and normal spectacles are both worn.

The foregoing is considered as illustrative only of the principles of the invention. Further, since numerous modifications and changes will readily occur to those skilled in the art, it is not desired to limit the invention to the exact construction and applications shown and described, and accordingly, all suitable modifications and equivalents may be resorted to, falling within the scope of the invention and the appended claims and their equivalents.

**Claims**

1. Secondary spectacles for use in conjunction with primary spectacles, the secondary spectacles comprising a pair of lenses (6) interconnected in spaced relationship by a bridge (1) and characterized in that said bridge (1) is shaped so as to be received and retained within a gap defined by the bridge (3), the brace bar (2), and the lenses (5) of the primary spectacles so as to locate the lenses (6) of the secondary spectacles in relation to the lenses (5) of the primary spectacles.

2. Secondary spectacles as claimed in Claim 1 characterized in that the bridge (1) of the secondary spectacles is an elastic fit between the bridge (3) and brace bar (2) of the primary spectacles.

3. Secondary spectacles as claimed in Claim 2 characterized in that the elasticity of the bridge (1) is derived from the resilience of the material of the bridge.

4. Secondary spectacles as claimed in Claim 2 characterized in that the bridge (1) includes a component or components spring biassed towards the primary spectacles bridge (3) or/and brace bar (2) respectively.

5. Secondary spectacles as claimed in Claim 1 characterized in that said secondary spectacles bridge (1) can engage the brace bar (2) and bridge (3) of the primary spectacles as a snap fit.

6. Secondary spectacles as claimed in Claim 1 or Claim 5 characterized in that said bridge (1) has grooves (11, 12) for receiving the primary spectacles brace bar (2) and bridge (3) respectively.

7. Secondary spectacles for use in conjunction with primary spectacles of the kind having a pair of primary lenses (5) interconnected in spaced relationship by a primary bridge (3), the secondary spectacles comprising a pair of secondary lenses (6) interconnected in spaced relationship in that the secondary bridge (1) and being characterized in that the secondary bridge (1) is shaped to fit in use the gap defined by the bridge (3) and lenses of the primary spectacles to position the secondary lenses (6) in relation to the primary lenses (5) and includes means for gripping the primary spectacles bridge (1) to retain the secondary spectacles on the primary spectacles in use.

8. Secondary spectacles as claimed in Claim 1 or Claim 7 characterized in that the secondary spectacles bridge (1) incorporated a strap (9) for embracing at least the primary spectacles bridge (3) to retain the secondary spectacles on the primary spectacles.

9. Secondary spectacles as claimed in Claim 7 characterized in that the secondary spectacles bridge (1) is arranged to engage the primary spectacles bridge (3), or part thereof, as a snap fit.

10. In combination, primary spectacles having a pair of primary lenses (5) interconnected in spaced relationship by a primary bridge (3) and secondary spectacles as claimed in any one of Claims 1 to 9 the lenses (6) of the secondary spectacles being positioned in relation to the lenses (5) of the primary spectacles by engagement of the bridge (1) of the secondary spectacles in the gap defined between the lenses (5) and the bridge (3) of the primary spectacles.

11. A combination as claimed in Claim 10 characterized in that the primary spectacles incorporate a brace bar (2) parallel to the bridge (3), the gap receiving the secondary spectacles bridge (1) being further defined by said brace bar (2).

## FIG.1

## FIG.2

(a)   (b)   (c)

COIL SPRING

## FIG.3

## FIG.4

(a)

(b)

FLAT SPRING

## FIG.5

## FIG.6

## FIG.7

## FIG.8

## FIG.9

## FIG.10

(a)          (b)

**European
Patent Office**

**EUROPEAN SEARCH
REPORT**

Application Number

**EP 91 30 3734**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 194 065   (POLAROID)<br>* Abstract; page 6, lines 4-35; page 7 *<br>– – – | 1-5,9-11 | G 02 C 9/00 |
| X | EP-A-0 193 325   (POLAROID)<br>* Abstract; claims *<br>– – – | 1-5,9-11 | |
| X | US-A-4 890 910   (A.E. GAZELEY)<br>* Abstract; claims *<br>– – – | 1-5,9-11 | |
| X | US-A-4 247 178   (J.E. COOK)<br>* Abstract; claims *<br>– – – | 1,6 | |
| X | BE-A-515 366   (MANDRILLON & CIE)<br>* Page 1 *<br>– – – | 1,7-8 | |
| P,X | FR-A-2 643 728   (LES FRERES LISSAC)<br>* Abstract *<br>– – – | 1,6 | |
| A | FR-A-2 292 251   (ESSILOR)<br>* Claims *<br>– – – | 1-11 | |
| A | US-A-2 414 757   (L.G. MITBY)<br>* Column 1; column 2, lines 1-38 *<br>– – – | 1-11 | **TECHNICAL FIELDS SEARCHED (Int. Cl.5)**<br><br>G 02 C 9/00<br>G 02 C 9/04<br>G 02 C 9/02 |
| A | US-A-2 949 609   (R.H. SAGER)<br>– – – – – | | |

**The present search report has been drawn up for all claims**

| Place of search | Date of completion of search | Examiner |
|---|---|---|
| The Hague | 06 November 91 | CALLEWAERT-HAEZEBROU |